# EUROPÄISCHE PATENTSCHRIFT

(11) **EP 1 519 842 B1**
(45) Veröffentlichungstag und Bekanntmachung des Hinweises auf die Patenterteilung: **07.03.2007**
(21) Anmeldenummer: 02776803.5
(22) Anmeldetag: 11.10.2002
(51) Int. Cl.: B60B 33/00

(54) **LAUFROLLE FÜR EINKAUFS- UND TRANSPORTWAGEN**
RUNNING WHEEL FOR SHOPPING AND TRANSPORT TROLLEY
GALET DE ROULEMENT POUR CHARIOTS DE SUPERMARCHE ET CHARIOTS DE TRANSPORT

(30) Priorität: 04.07.2002 DE 10229931
(43) Veröffentlichungstag der Anmeldung: 06.04.2005
(73) Patentinhaber: WANZL METALLWARENFABRIK GMBH, D-89336 Leipheim (DE)
(72) Erfinder: DEYERLER, Kurt, 89257 Illertissen (DE)
(86) Internationale Anmeldenummer: PCT/DE2002/003838
(87) Internationale Veröffentlichungsnummer: WO 2004/005050

(56) Entgegenhaltungen:
- WO-A-96/17733
- DE-U- 29 518 629
- DE-U- 29 619 734
- FR-A- 2 373 405

## Beschreibung

Die Erfindung betrifft eine Laufrolle für Einkaufs- und Transportwagen, die zur Beförderung auf Personenfahrsteigen geeignet sind.

Eine Laufrolle dieser Art ist unter der Bezeichnung "Fahrsteigrolle Typ III" von der Anmelderin entwickelt worden. Diese Laufrolle weist eine mit Gabelschenkeln ausgestattete Radgabel auf, die einen aus Vierkantstahl gebildeten Achskörper trägt, der eine zwischen den Gabelschenkeln angeordnete Nabe durchdringt. Auf der Nabe sind zwei zum Abrollen auf dem Fußboden bestimmte Laufscheiben drehbar gelagert, wobei die Nabe einen umlaufenden Steg aufweist, der sich zwischen den beiden Laufscheiben befindet. Der Steg ist nach unten verlängert und bildet eine Halterung zur Auf nahme eines Stützmittels, auf dem sich die Laufrolle in bekannter Weise dann abstützt, wenn sich deren Laufscheiben in den Rillen des Transportbandes eines Personenfahrsteiges befinden. Die Stützkräfte werden dabei über die Nabe auf den Achskörper und von diesem auf die Radgabel übertragen. Die Nabe muss deshalb lagegenau und verdrehsicher zwischen den Gabelschenkeln so angeordnet werden, dass das Stützmittel immer nach unten weist. Die Verdrehsicherheit wird durch die Verwendung des aus Vierkantstahl gebildeten Achskörpers erreicht. Der Achskörper ist deshalb in quadratischen Durchbrüchen der Gabelschenkel gelagert. Ebenso weist die Nabe einen Durchbruch mit quadratischem Querschnitt zur Aufnahme des Achskörpers auf.

Man ist bestrebt, die Fertigungskosten für derartige Laufrollen so niedrig wie möglich zu halten. Zu diesen Kosten gehören auch jene Montagekosten, die aufzubringen sind, wenn die einzelnen Bauteile zu fertigen Laufrollen zusammengefügt werden. Es liegt deshalb nahe, Montagevorgänge der eben beschriebenen Art zu automatisieren. Bei der hier vorliegenden Laufrolle sind solche Vorgänge relativ schlecht zu realisieren, da die Nabe wegen der nach unten verlängerten Halterung und wegen des vierkantigen Durchbruches zur Aufnahme des Achskörpers positionsgenau zwischen den Gabelschenkeln eingefügt werden muss. Sowohl der aus Vierkantstahl gefertigte Achskörper als auch die eben beschriebene Nabe eignen sich deshalb schlecht für eine automatische Montage.

Das deutsche Gebrauchsmuster DE 295 18 629 U1 beschreibt ebenfalls eine Laufrolle für Einkaufs- und Transportwagen, die zur Beförderung auf Personenfahrsteigen bestimmt sind. Zwischen den Gabelschenkeln der Radgabel dieser Laufrolle sind zwei Nabenhälften angeordnet, auf denen zwei Laufscheiben drehbar gelagert sind. Als Achskörper, der die beiden Nabenhälften und die Gabelschenkel durchdringt, ist eine Schraube vorgesehen, die durch eine Mutter gesichert wird. An der Außenseite eines der beiden Gabelschenkel ist ein Stützfuß angeordnet. Der Stützfuß trägt ein Stützmittel, das die gleiche Funktion übernimmt, wie bei der vorab genannten Laufrolle aufgezeigt.

Die Laufscheiben der beiden eben beschriebenen und zum Stand der Technik zählenden Laufrollen sind so in einem Abstand zueinander angeordnet, dass mit solchen Laufrollen ausgestattete Einkaufs- und Transportwagen auf Personenfahrsteigen beförderbar sind, die zumindest der europäischen Norm EN 115 entsprechen. Die Laufscheiben der Laufrollen tauchen dabei in die Rillen des sich bewegenden Fahrsteigbandes ein, so dass das oder die Stützmittel der Laufrollen auf den die Rillen bildenden Stege aufliegen und die Einkaufs- und Transportwagen auf dem Personenfahrsteig arretiert sind.

Es sind aufgrund verschiedener Bauweisen der Personenfahrsteige zwei unterschiedliche Abstandsmaße (Teilungen) für die eben genannten Rillen zu beachten. Ein erstes Abstandsmaß beträgt 8,5 mm, das zweite Abstandsmaß ist mit 9 mm bemessen. Dieser Umstand hat dazu geführt, dass in der Vergangenheit zwei Sorten von Laufrollen entwickelt wurden, bei denen der Abstand (Spur) der Laufscheiben den beiden unterschiedlichen Abstandsmaßen der Rillen angepasst worden sind. Bei einer ersten Laufrollensorte beträgt die durch die Laufscheiben gebildete Spur 25,5 mm (3 x 8,5 mm) und bei der zweiten Laufrollensorte 27 mm (3 x 9 mm). Unterschiedliche Laufrollen zur Erfüllung des gleichen Zwecks führen zu getrennter Lagerhaltung und erhöhen die Gefahr, bei reparaturbedingtem Auswechseln der Laufrollen vertauscht oder verwechselt zu werden.

Das Gebrauchsmuster DE 29619734 U offenbart eine gattungsgemäße Laufrolle, wobei die Stützmittel an den Gabelschenkeln angeordnet sind.

Es ist Aufgabe der Erfindung, auf dem Fußboden befindliche Fäden und dergleichen von den Rillenkugellagern der Laufscheiben fernzuhalten.

Als Lösung wird eine Laufrolle vorgeschlagen, die so gestaltet ist, wie im Patentanspruch 1 beschrieben.

Es ist weiter Aufgabe der Erfindung, eine Laufrolle so weiterzuentwickeln, dass ein automatischer Zusammenbau der einzelnen Laufrollenteile besser und schneller als bisher möglich ist. Dabei soll die Funktionalität der Laufrolle nicht nachteilig beeinträchtigt werden.

Gemäß einer Weiterentwicklung der Erfindung und aufbauend auf die aufzufindende Lösung soll es ferner möglich sein, ein und dieselbe Laufrolle auf Personenfahrsteigen einzusetzen, deren Rillenabstände 8,5 mm oder 9 mm betragen.

Bei der vorgeschlagenen Laufrolle muss die Nabe nicht mehr das Stützmittel aufnehmen. Dadurch ist es möglich, der Nabe eine gleichmäßig geometrische, bevorzugt zylindrische Form zu verleihen, die eine automatische Montage wesentlich erleichtert. Es muss nicht auf eine passgenaue Anordnung bezüglich des Stützmittels und eines vierkantigen Achskörpers Rücksicht genommen werden. Auch der Achskörper weist einen zylindrischen Querschnitt auf, der herstellungs- und montagetechnisch von Vorteil ist. Ferner ist im Gegensatz zu den beiden vorhin erwähnten Nabenhälften nur eine einzige Nabe erforderlich. Eine einzige Nabe ist besser und schneller automatisch zu montieren als zwei Nabenhälften. Beim Abstützvorgang der Laufrolle auf einem Personenfahrsteig unter Zuhilfenahme des wenigstens einen Stützmittels erweist sich die neu gestaltete Nabe weder störend noch hinderlich, da die untere Begrenzung der Nabe in zweckmäßiger Weise oberhalb der Aufstandsfläche des Stützmittels endet. Die Funktionalität der Laufrolle ist damit gewahrt.

Hält man den Steg der Nabe sehr schmal, so kann die Laufrolle so gestaltet werden, dass die beiden Laufscheiben beim Aufsetzen der Laufrolle auf einen Personenfahrsteig in entweder zwei unmittelbar benachbarte Rillen des Transportbandes eintauchen oder dass sich zwischen den beiden Laufscheiben zwei Stege oder eine Rille des Transportbandes befinden. Da die Breite der Laufscheiben geringer ist als die Breite der Rillen, kann der Achsabstand der beiden Laufscheiben so gewählt werden, dass die Laufrolle auf Personenfahrsteigen einsetzbar ist, bei denen das Abstandsmaß der Rillen entweder 8,5 mm oder 9 mm beträgt. Dadurch lassen sich die eingangs beschriebenen zweierlei Sorten von Laufrollen vermeiden.

Die Erfindung wird anhand eines zeichnerisch dargestellten Ausführungsbeispieles näher erläutert.

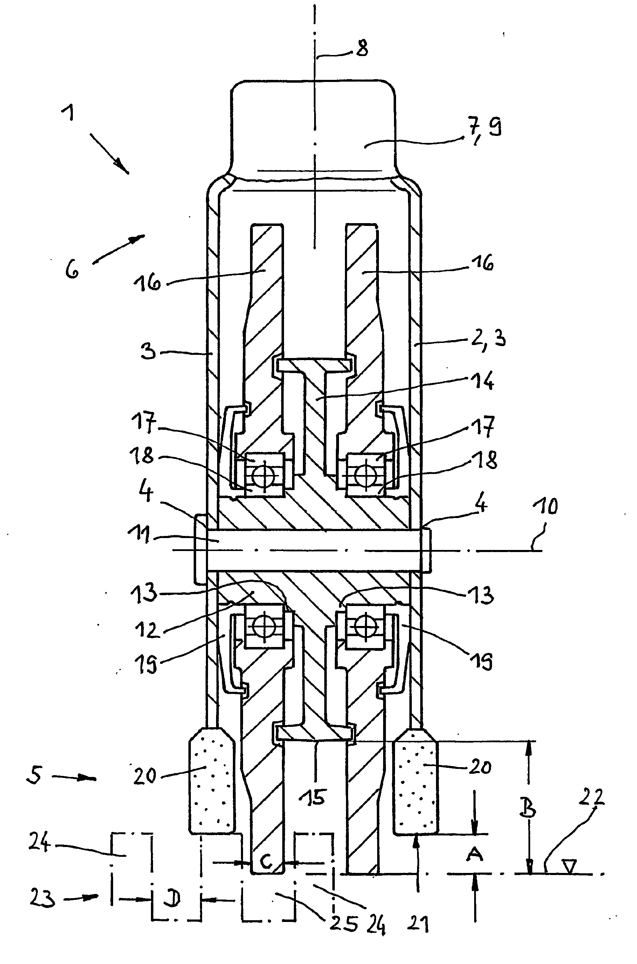

Die überwiegend geschnitten dargestellte Laufrolle 1 ist für Einkaufs- und Transportwagen bestimmt, die zur Beförderung auf Personenfahrsteigen geeignet sind. Solche Laufrollen 1 wirken dann selbsttätig bremsend, wenn sich ein Einkaufs- oder Transportwagen auf dem Transportband 23 eines Personenfahrsteiges befindet. Die Laufrolle 1 weist eine mit Gabelschenkeln 3 ausgestattete Radgabel 2 auf, die in ihrem oberen Bereich 6 eine gehäuseartige Ausformung 7 aufweist, in der ein um eine vertikale Achse 8 drehbares Rillenkugellager 9 eingesetzt ist. Eine derartige Laufrolle 1 wird auch als Lenkrolle bezeichnet. Dessen ungeachtet kann die hier vorliegende Laufrolle 1 auch ohne Rillenkugellager 9 ausgestattet sein, so dass eine solche Laufrolle 1 sich nicht um eine vertikale Achse 8 verschwenken lässt. Laufrollen 1 dieser Art werden üblicherweise als "Bockrollen" bezeichnet. Alle nun nachfolgend beschriebenen technischen Merkmale sind diesen beiden Arten von Laufrollen 1 gemeinsam. Zwischen den beiden Gabelschenkeln 3 ist eine Nabe 12 angeordnet, die von einem auf einer horizontalen Achse 10 gelegenen Achskörper 11 getragen wird, der sich in je einem an einem Gabelschenkel 3 befindlichen Durchbruch 4 abstützt und gegen axiales Verschieben gesichert ist. Der Achskörper 11 ist bolzenförmig gestaltet und besitzt einen runden, also zylindrischen Querschnitt. Auf der Nabe 12 sind zwei zylindrische Laufscheiben 16 angeordnet und auf der Nabe 12 um die horizontale Achse 10 drehbar gelagert. Im Beispiel weist jede Laufscheibe 16 ein Rillenkugellager 17 auf, wobei sich jedes Rillenkugellager 17 mit seinem Innenring 18 in axialer Richtung jeweils an einer an der Nabe 12 vorgesehenen ringförmigen Schulter 13 abstützt. Über weitere Sicherungsmittel 19, im Beispiel sind es sog. "Fadenschutzscheiben", werden die Laufscheiben 16 über die Innenringe 18 ihrer Rillenkugellager 17 gegen die Schultern 13 verspannt, so dass die Laufscheiben 16 nicht mehr in axialer Richtung bewegbar sind. Die Nabe 12 weist einen Steg 14 auf, der sich zwischen den beiden Laufscheiben 16 befindet und dessen Außenkontur eine zylindrische oder eine andere geometrisch gleichmäßige Form, beispielsweise die eines Zwölfeckes aufweist. Der Außendurchmesser oder die Dicke des Steges 14 ist größer als die Außendurchmesser der übrigen zylindrischen Flächenabschnitte der Nabe 12, siehe Zeichnung. Im Beispiel übt der Steg 14, bezogen auf beide Laufscheiben 16, eine Fadenschutzfunktion aus, d.h., der Steg 14 ist in der Lage, auf dem Fußboden 22 befindliche Fäden und dergleichen von den Rillenkugellagern 17 der Laufscheiben 16 fernzuhalten. Die beiden Gabelschenkel 3 sind über die horizontale Achse 10 hinaus nach unten verlängert und tragen an jedem Gabelende 5 ein Stützmittel 20, das zum Abstützen der Laufrolle 1 dann bestimmt ist, wenn sich deren Laufscheiben 16 in den Rillen 25 eines Transportbandes 23 eines Personenfahrsteiges befinden. Dieser Zustand ist in der Zeichnung links angedeutet. Es sind zwei Stege 24 und zwei Rillen 25 eines Transportbandes 23 eingezeichnet. Rechts in der Zeichnung ist der Fußboden 22 angedeutet, auf dem die Laufscheiben 16 der Laufrolle 1 dann abrollen, wenn ein Einkaufs- oder Transportwagen auf dem Fußboden 22 bewegt wird. Maß A zeigt den vom Fußboden 22 zur Aufstandsfläche 21 der Stützmittel 20 gebildeten Abstand im Vergleich zu jenem Abstand B, der sich dann ergibt, wenn die Strecke gemessen vom Fußboden 22 bis zur untersten Begrenzung 15 des Steges 14 ermittelt wird. Die unterste Begrenzung 15 des Steges 14 ist höher angeordnet als die Aufstandsfläche 21 des wenigstens einen Stützmittels 20.

Die Zeichnung zeigt jene Laufrolle 1, die gemäß der erweitert gestellten Aufgabe als bevorzugte Ausführungsform betrachtet werden kann. Der Steg 14 der Nabe 12 ist so schmal gehalten, dass sich nur ein einziger Steg 24 des Laufbandes 23 des Personenfahrsteiges zwischen den beiden Laufscheiben 16 befindet. Demzufolge sind die Laufscheiben 16 in je einer Rille 25, die nur durch den eben genannten Steg 24 getrennt sind, angeordnet. Die so gestaltete Laufrolle 1 kann die unterschiedlichen Abstandsmaße 8,5 mm und 9 mm der Rillen 25 mühelos überwinden. Gleiches gilt auch für eine Laufrolle 1, deren Laufscheiben 16 so weit beabstandet sind, dass sich in aufgesetztem Zustand der Laufrolle 1 auf das Transportband 23 eines Personenfahrsteiges zwei Stege 24 (oder eine Rille 25) zwischen den beiden Laufscheiben 16 befinden. In der Praxis beträgt die Dicke C einer jeden Laufscheibe etwa 4,4 mm, während die Breite D der Rillen 25 mit etwa 6 bis 6, 75 mm festgelegt ist. Die durch die genannten Maße geschaffenen Toleranzbereiche lassen somit die Verwendung ein und derselben Fahrrolle 1 bei den beiden unterschiedlichen Personenfahrsteigen zu.

## Patentansprüche

1. Laufrolle (1) für Einkaufs- und Transportwagen, die zur Beförderung auf Personenfahrsteigen geeignet sind, mit einer mit Gabelschenkeln (3) ausgestatteten Radgabel (2), die einen mit einem runden Querschnitt ausgestatteten Achskörper (11) trägt, der eine zwischen den Gabelschenkeln (3) angeordnete Nabe (12) durchdringt, auf der zwei Laufscheiben (16) gelagert sind und mit mindestens einem Stützmittel (20), das an wenigstens einem der beiden Gabelschenkel (3) angeordnet ist und zum Abstützen der Laufrolle (1) dann bestimmt ist, wenn sich deren Laufscheiben (16) in den durch Stege (24) getrennten Rillen (25) des Transportbandes (23) eines Personenfahrsteiges befinden, **dadurch gekennzeichnet, dass** die Nabe (12) einen Steg (14) aufweist, der sich zwischen den Laufscheiben (16) befindet, wobei die Außenkontur des Steges (14) eine zylindrische oder andere geometrisch gleichmäßige Form aufweist und wobei vom Fußboden (22) aus gemessen die unterste Begrenzung (15) des Steges (14) der Nabe (12) höher angeordnet ist, als die Aufstandsfläche (21) des mindestens einen Stützmittels (20).

2. Laufrolle nach Anspruch 1, **dadurch gekennzeichnet, dass** der Abstand der beiden Laufscheiben (16) so gewählt ist, dass sich in aufgesetztem Zustand der Laufrolle (1) auf das Transportband (23) eines Personenfahrsteiges die Laufscheiben (16) in je einer unmittelbar benachbarten, nur durch einen Steg (24) getrennten Rille (25) befinden.

3. Laufrolle nach Anspruch 1, **dadurch gekennzeichnet, dass** der Abstand der beiden Laufscheiben (16) so gewählt ist, dass sich in aufgesetztem Zustand der Laufrolle (1) auf das Transportband (23) eines Personenfahrsteiges die Laufscheiben (16) in je einer durch zwei Stege (24) getrennten Rille (25) befinden.

## Claims

1. A caster (1) for shopping and transport trolleys which are suitable for conveyance on travelators, comprising a wheel fork (2) provided with fork arms (3) and carrying an axle body (11) having a round cross-section and extending through a hub (12) which is arranged between the fork arms (3) and on which two running wheels (16) are mounted, and comprising at least one supporting means (20) arranged on at least one of the two fork arms (3) and intended to support the caster (1) when its running wheels (16) are located in the grooves (25) - separated by bridge pieces (24) - of the conveyor belt (23) of a travelator, **characterised in that** the hub (12) having a crosspiece (14) arranged between the running wheels (16) and the outer contour of the crosspiece (14) having a cylindrical or other geometrically uniform shape, and wherein, measured from the floor **(22),** the lowermost boundary (15) of the crosspiece (14) of the hub (12) is arranged higher than the contact surface (21) of the at least one supporting means (20).

2. A caster according to claim 1, **characterised in that** the distance between the two running wheels (16) is selected so that, when the caster (1) is placed on the conveyor belt (23) of a travelator, the running wheels (16) are arranged in directly adjacent grooves (25) separated by only one bridge piece (24).

3. A caster according to claim 1, **characterised in that** the distance between the two running wheels (16) is selected so that, when the caster (1) is placed on the conveyor belt (23) of a travelator, the running wheels (16) are arranged in grooves (25) separated by two bridge pieces (24).

## Revendications

1. Roulette (1) pour chariots de supermarché et de transport destinés à être déplacés sur des trottoirs roulants, comprenant une fourche (2) dotée de branches (3) et servant de support à un axe (11) de section transversale circulaire qui traverse un moyeu (12) disposé entre les branches (3) sur lequel sont montés deux disques de roulement (16), comprenant également au moins un moyen d'appui (20) disposé sur au moins l'une des deux branches (3) de la fourche et destiné à soutenir la roulette (1) lorsque les disques (16) de cette dernière sont logés dans les rainures (15) séparées par des nervures (24) de la bande de transport (23) d'un trottoir roulant, **caractérisée en ce que** le moyeu (12) présente une aile (14) s'étendant entre les disques (16), le contour extérieur de l'aile (14) ayant une forme cylindrique ou une autre forme géométrique régulière, et sachant que si l'on mesure à partir du sol (22), la limite inférieure de l'aile (14) du moyeu (12) est située plus haut que la surface d'appui (21) d'au moins l'unique moyen d'appui (20).

2. Roulette selon la revendication 1, **caractérisée en ce que** l'écart entre les deux disques de roulement (16) est choisi de telle sorte que, lorsque la roulette (1) repose sur la bande transporteuse (23) d'un trottoir roulant, les disques de roulement (16) se trouvent chacun dans une rainure (25), lesdites rainures étant directement adjacentes et séparées par une seule nervure (24).

3. Roulette selon la revendication 1, **caractérisée en ce que** l'écart entre les deux disques de roulement (16) est choisi de telle sorte que, lorsque la roulette (1) repose sur la bande transporteuse (23) d'un trottoir roulant, les disques de roulement (16) se trouvent chacun dans une rainure (25), lesdites rainures étant séparées par deux nervures (24).
